# FASCICULE DE BREVET EUROPEEN

(11) **EP 2 598 260 B1**
(45) Date de publication et mention de la délivrance du brevet: **13.07.2016**
(21) Numéro de dépôt: 11752290.4
(22) Date de dépôt: 26.07.2011
(51) Int. Cl.: B09B 3/00, B27N 3/00, B29B 17/02

(54) **PROCÉDÉ DE RECYCLAGE DE PRODUITS D'AMEUBLEMENT, NOTAMMENT DE MATELAS, DE SOMMIERS ET DE SIÈGES ET INSTALLATION DE RECYCLAGE ASSOCIÉE**
VERFAHREN ZUR WIEDERVERWERTUNG VON MÖBELN, INSBESONDERE MATRATZEN, BETTRAHMEN UND SITZE UND ZUGEHORIGE RECYCLINGSANLAGE
PROCESS FOR RECYCLING FURNITURE, IN PARTICULAR MATTRESSES , BED BASES AND SEATS AND ASSOCIATED RECYCLING INSTALLATION

(30) Priorité: 29.07.2010 FR 1056249
(43) Date de publication de la demande: 05.06.2013
(73) Titulaire: Ecoval Environnement, 77185 Lognes (FR)
(72) Inventeur: LANZA, Rémy, Bollene 84500 (FR); TOUATI, Salim, F-26250 Livron Sur Drome (FR)
(74) Mandataire: Thinat, Michel
(86) Numéro de dépôt international: PCT/FR2011/051791
(87) Numéro de publication internationale: WO 2012/022888

(56) Documents cités:
- EP-A1- 1 052 021
- WO-A2-2005/056194
- BE-A6- 1 016 388
- DE-A1-102008 057 557
- DE-C1- 19 640 503
- US-A1- 2002 137 421
- US-A1- 2008 075 915

## Description

La présente invention concerne en général le domaine de l'ameublement et en particulier celui de la literie et des sièges pour l'ameublement domestique. Plus précisément, l'invention concerne selon un premier aspect un procédé de recyclage d'éléments de literie, notamment de matelas ou de sommiers, et de recyclage d'éléments de sièges, notamment de coussins d'assise et de dossier.

En fin de vie, les matelas, les sommiers et les sièges sont aujourd'hui mis en décharge, ou incinérés. Ces solutions ne sont pas satisfaisantes du point de vue écologique. Les matelas, les sommiers et les sièges en fin de vie représentent chaque année un flux très important. Ils sont constitués de matériaux très différents les uns des autres, comme l'acier, le bois, les textiles, les mousses de polyuréthane, le latex etc. L'incinération de ces matériaux entraîne des rejets de gaz, dont certains peuvent être toxiques. Quand ils sont mis en décharge, les matelas, les sommiers et les sièges occupent un volume important et sont mal adaptés aux filières de traitement actuellement en place. De plus, certains matériaux à terme ne se transforment pas en matière organique.

DE 196 40 503 décrit un procédé de recyclage de meubles, comportant une étape de démembrement, une étape de tri, une étape de broyage, et une étape de mélange conformes au préambule de la revendication 1 ainsi qu'une installation de recyclage selon le préambule de la revendication 16.

US 2002/137421 décrit un procédé de fabrication d'une nappe de matériau fibreux non tissé, la nappe comprenant des fibres bicomposantes et des fibres textiles.

DE 10 2008 057 557 décrit un procédé de fabrication d'une nappe de matériau non tissé, à partir des fibres naturelles telles que du bois, et de fibres bicomposantes.

Dans ce contexte, l'invention vise à proposer un procédé de recyclage de produits d'ameublement, qui soit plus satisfaisant d'un point de vue écologique que la mise en décharge ou l'incinération.

A cette fin, l'invention porte sur un procédé de recyclage de produits d'ameublement notamment de matelas, de sommiers et de sièges, selon la revendication 1.

Le procédé peut encore présenter une ou plusieurs des caractéristiques des revendications dépendantes 2 à 15.

Selon un second aspect, l'invention porte sur une installation de recyclage de produits d'ameublement, notamment de matelas, de sommiers et de sièges, selon la revendication 16.

D'autres caractéristiques et avantages de l'invention ressortiront de la description détaillée qui en est donnée ci-dessous, à titre indicatif et nullement limitatif, en référence aux figures annexées, parmi lesquelles :
- la Figure 1 est un diagramme d'étapes, illustrant le procédé de l'invention ;
- la Figure 2 est une représentation schématique simplifiée de l'étape de désinfection par ondes magnétiques ;
- la Figure 3 est une représentation schématique simplifiée des lignes de production pour les étapes de broyage, de mélange, de formation de la nappe non consolidée et de consolidation ;
- la Figure 4 est une représentation schématique simplifiée de l'étape de consolidation de la nappe de matériaux non consolidée.

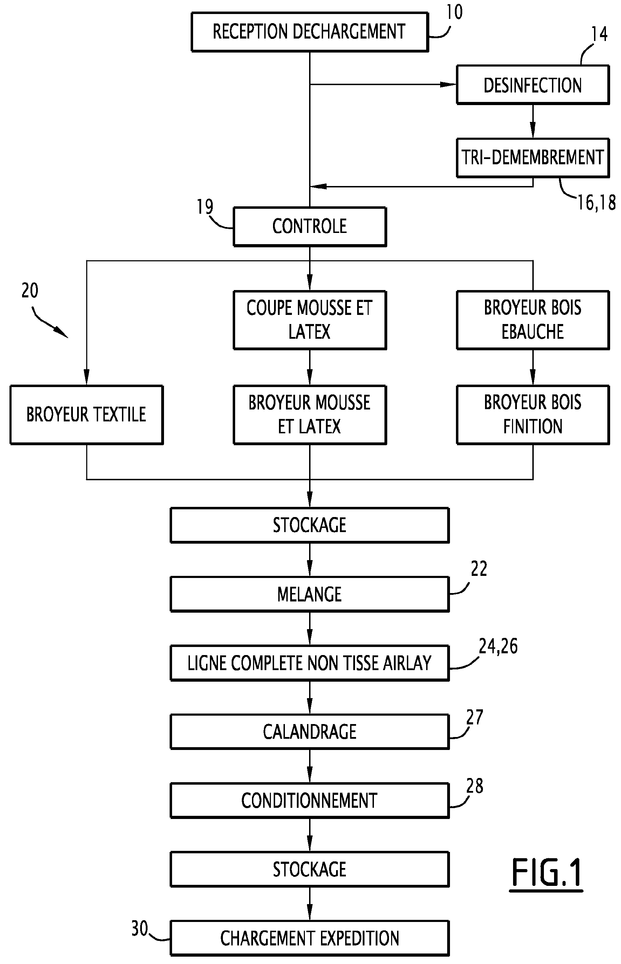

Le procédé qui va être décrit ci-dessous, et dont les principales étapes sont identifiées schématiquement sur la Figure 1, est destiné à recycler des éléments de literie et de sièges en fin de vie. Ces éléments de literie sont, entre autres, des matelas et des sommiers. Toutefois, le procédé permet de traiter d'autres types de produits : sièges rembourrés tels que canapés, canapés-lits, banquettes, banquettes convertibles, fauteuils, fauteuils de relaxation, chutes provenant de la fabrication de matelas et de sommiers neufs, cette liste n'étant pas limitative.

Comme représenté sur la Figure 1, le procédé comporte les étapes suivantes :
- une étape 10 de réception et de déchargement des éléments à traiter ;
- une étape 14 de désinfection des éléments à traiter ;
- une étape 16 de démembrement, dans laquelle des matériaux de base sont obtenus par démembrement des éléments à traiter ;
- une étape 18 de tri, dans laquelle les matériaux de base sont séparés en plusieurs familles de matériaux, selon la nature des matériaux de base ;
- une étape de contrôle 19, visant à détecter dans lesdits éléments une pluralité de composés chimiques prédéterminés ;
- une étape 20 de broyage des différentes familles de matériaux ;
- une étape 22 de mélange, dans laquelle un mélange est préparé, le mélange comprenant une quantité prédéterminée d'au moins une famille de matériaux broyés, et, plus généralement, des quantités respectives prédéterminées de plusieurs familles de matériaux broyés ;
- une étape 24 de formation d'une nappe de matériau non tissé non consolidée à partir du mélange ;
- une étape 26 de consolidation de la nappe de matériau non tissé non consolidée ;
- une étape 27 de calandrage de la nappe de matériau non tissé consolidée ;
- une étape 28 de conditionnement de la nappe de matériau non tissé consolidée et une étape 30 de chargement et d'expédition de la nappe de matériaux consolidée.

Ces différentes étapes vont maintenant être détaillées chacune à leur tour.

Les éléments à traiter peuvent comporter :
- des matelas à ressorts, qui comprennent généralement une enveloppe externe textile, et des ressorts logés dans l'enveloppe externe ;
- des matelas à ressorts en sachets, qui comprennent des chapelets de ressorts enfermés dans des sachets textiles, et une enveloppe textile à l'intérieur de laquelle sont placés les ressorts en sachets ;
- des matelas en mousse, qui comprennent une enveloppe textile et une âme en mousse logée à l'intérieur de l'enveloppe textile, la mousse comportant une majorité de polyuréthane ; la mousse comporte généralement plus de 90% de polyuréthane et peut comporter jusqu'à 100% de polyuréthane ;
- des matelas en latex, qui comportent une enveloppe textile, et une âme en latex logée à l'intérieur de l'enveloppe textile ;
- des sommiers, qui comportent généralement un cadre rigide en bois ou en métal, et peuvent comporter des lattes en bois, une enveloppe textile, des ressorts métalliques en spirale etc.

Les éléments à traiter qui sont des éléments en fin de vie, par exemple les matelas les sommiers, les coussins de sièges usagés, sont ensuite dirigés vers l'étape de désinfection 14. Les éléments à traiter qui ne sont pas en fin de vie, par exemple les chutes de fabrication de matelas et de sommiers neufs, sont dirigés directement vers l'étape de broyage 20, sans passer par l'étape de désinfection 14, ni par les étapes de démembrement 16 et de tri 18.

Le but de l'étape de désinfection est de détruire les germes bactériologiques qui peuvent être présents dans les éléments à traiter. La désinfection doit être suffisante d'un point de vue sanitaire pour protéger les opérateurs travaillant aux différentes étapes du procédé, et pour garantir une hygiène parfaite des produits finis recyclés.

L'étape de désinfection n'est pas une étape de stérilisation et ne vise pas à détruire intégralement l'ensemble des germes présents dans les éléments à traiter.

L'étape de désinfection vise à supprimer au moins 99% des germes bactériologiques, de préférence au moins 99,9% des germes bactériologiques, encore de préférence au moins 99,99% des germes bactériologiques.

L'étape de désinfection est effectuée soit par voie chimique, soit par ondes électromagnétiques.

Les sommiers, les matelas à ressorts et les matelas à ressorts ensachés sont traités par voie chimique. Les matelas en mousse et les matelas en latex sont traités soit par voie chimique, soit par ondes électromagnétiques.

La désinfection par voie chimique consiste à pulvériser sur la surface externe des éléments à traiter un produit désinfectant. Cette opération est réalisée dans une chambre hermétique. Après pulvérisation, l'élément à traiter reste dans la chambre pendant une durée de 2h30 environ.

Le produit désinfectant est par exemple le produit sous le nom commercial ANIOS DVA HPH vendu par le laboratoire ANIOS. La quantité de produit utilisée est de l'ordre de 8 ml pour un matelas de taille normale.

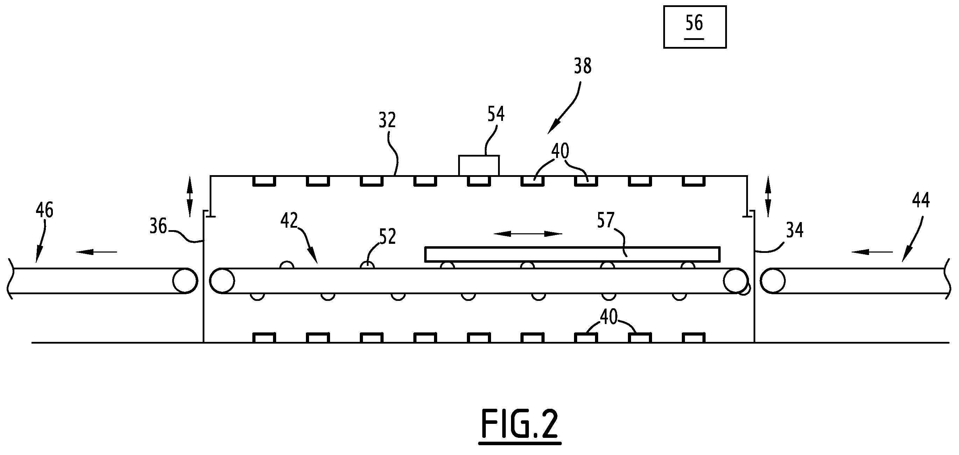

La désinfection par ondes électromagnétiques est effectuée en plaçant l'élément à traiter dans un tunnel micro-ondes, représenté sur la Figure 2.

La puissance maximale du générateur de micro-ondes utilisé est de 80kW. En variante, la puissance maximale du générateur de micro-ondes est de 60kW.

La fréquence du magnétron qui génère les micro-ondes est de 2450MHz environ.

L'élément à traiter est soumis à un rayonnement micro-ondes, ce qui produit une élévation de température rapide au sein de cet élément. La puissance du rayonnement micro-ondes et la durée d'exposition sont choisies en fonction de la taille du matelas, de son épaisseur et du matériau constituant l'âme (mousse de polyuréthane ou latex). La puissance et la durée sont choisies de manière à maintenir la couche centrale du matelas à une température d'au moins 70°C pendant une durée d'au moins 45 secondes. De préférence, la puissance et la durée sont choisies de manière à maintenir la couche centrale du matelas à une température comprise entre 70°C et 90°C pendant une durée comprise 45 secondes et 90 secondes.

La durée d'exposition se décompose en une durée de chauffe et une durée de maintien en température. La durée de chauffe permet d'amener la couche centrale de la température ambiante à une température supérieure à 70°C.

Pour un matelas en mousse de polyuréthane, la durée de chauffe est typiquement comprise entre 30 secondes (matelas de taille 90x190 cm et de 10 cm d'épaisseur, puissance 80 kW) et 180 secondes (matelas de taille 180x200 cm et de 30 cm d'épaisseur, puissance 60 kW).

Pour un matelas en latex, la durée de chauffe est typiquement comprise entre 30 secondes (matelas de taille 90x190 cm et de 10 cm d'épaisseur, puissance 80 kW) et 230 secondes (matelas de taille 180x200 cm et de 30 cm d'épaisseur, puissance 60 kW).

A l'étape de démembrement 16, les éléments désinfectés sont démontés par des opérateurs.

A l'étape de tri, les matériaux de base obtenus par démembrement des éléments à traiter sont séparés, de préférence en cinq familles de matériaux. Le tri est effectué en fonction de la nature des matériaux de base. Les cinq familles sont les suivantes :
- une première famille rassemblant les matériaux de base qui vérifient en même temps les deux conditions suivantes : les matériaux ne contiennent pas de fibres textiles, et ils contiennent majoritairement du polyuréthane ;
- une seconde famille rassemblant les matériaux de base contenant majoritairement du latex ;
- une troisième famille rassemblant les matériaux de base contenant des fibres textiles ;
- une quatrième famille rassemblant les matériaux de base contenant majoritairement du bois ;
- une cinquième famille rassemblant les matériaux de base contenant majoritairement du métal.

Dans la première famille, on trouve essentiellement les âmes des matelas en mousse, et les chutes de fabrication des matelas en mousse de polyuréthane.

Dans la seconde famille, on trouve les âmes des matelas en latex.

On trouve dans la troisième famille essentiellement les revêtements textiles de matelas et de sommiers. Ces matériaux sont généralement des matériaux multicouches, certaines couches étant en textile et d'autres couches étant par exemple en mousse de polyuréthane, en ouate etc. Au total, ces matériaux comportent par exemple entre 15 et 25% de fibres textiles, le reste étant constitué de mousse ou d'autres substances.

Dans la quatrième famille, on trouve les structures en bois des sièges d'ameublement, des sommiers ou d'autres types de meubles, principalement des meubles de rangement ou de décoration d'intérieur.

La cinquième famille comporte essentiellement les ressorts hélicoïdaux se trouvant dans les matelas à ressorts, dans les matelas à ressorts en sachets, et dans les sommiers, ainsi que les cadres métalliques des sommiers ou des sièges.

A l'étape 19, la composition de certains matériaux des éléments à traiter est contrôlée. Ces matériaux sont ceux susceptibles de contenir des composés chimiques qui ne sont pas autorisés dans le produit fini. Ces composés chimiques sont par exemple des COV (Composés Organiques Volatiles), tels que le formaldéhyde. Les matériaux susceptibles de contenir de tels composés chimiques sont par exemple le latex, les mousses de polyuréthane, les résidus de colles etc.

Le contrôle est effectué en prélevant une petite quantité de chaque matériau à contrôler, et en analysant la composition de cet échantillon dans un appareil de détection automatique pour vérifier si l'échantillon contient un composé chimique figurant dans une liste prédéterminée. Cet appareil peut par exemple être un appareil de chromatographie en phase gazeuse couplé à un F.I.D. (Flame lonization Detector) Si le matériau contient un composé chimique de la liste, en une quantité inférieure à un seuil prédéterminé, ce matériau est traité par le procédé de recyclage. Les étapes de broyage et de consolidation 20 et 26 permettent en effet d'éliminer une fraction importante du composé chimique, et de faire que la concentration dudit composé chimique dans la nappe de produit non tissé consolidée soit dans les normes acceptables. L'étape de consolidation met en oeuvre un traitement thermique, comme expliqué plus loin, et est particulièrement efficace pour l'élimination des composés chimiques réglementés. Le seuil prédéterminé est spécifique à chaque composé chimique. Il est fonction entre autre du taux d'élimination du composé chimique aux étapes de broyage et de consolidation, et de la composition de la nappe de matériau non tissé (proportion du matériau contenant le composé chimique dans la nappe).

Si le matériau contient une quantité du composé chimique supérieure au seuil prédéterminé, alors ce matériau n'est pas traité par le procédé de recyclage. Il est dirigé par exemple vers une décharge contrôlée, prévue pour accepter des matériaux contenant le composé chimique détecté.

A l'étape de broyage 20, les différentes familles de matériaux sont traitées séparément.

Les première et seconde familles de matériaux sont traitées par le même type de machine, mais séparément. Les matériaux se présentent initialement sous forme de blocs. Les matériaux sont broyés en éléments de forme cubique, de granulométrie comprise entre 8 et 12 mm. L'opération est effectuée en deux temps. Dans un premier temps, les blocs sont coupés en tranches par des lames, par exemple dans une machine de type guillotine. Dans un second temps, les tranches sont réduites en éléments de petite taille, par exemple dans un granulateur à monorotor équipé de couteaux et trémie de calibrage.

La troisième famille de matériaux est traitée par exemple dans un broyeur à rouleaux équipés de couteaux, Les matériaux sortent des broyeurs sous la forme de fibres en bourre.

La quatrième famille de matériaux est broyée en copeaux de longueur comprise entre 10 et 20 mm et de largeur comprise 2 et 5 mm. L'opération de broyage est effectuée en deux temps. Les matériaux sont d'abord traités dans un broyeur d'ébauche à rotor, avec des grilles de séparation de 40 mm. Les matériaux issus du broyeur d'ébauche passent ensuite dans un broyeur secondaire, équipé de grilles d'environ 4 mm. Les copeaux sont collectés dans des sacs.

Des séparateurs vibrants équipés de rouleaux magnétiques sont placés immédiatement en aval de chaque broyeur. Ils permettent de séparer les pièces métalliques des autres matériaux broyés.

Concernant la cinquième famille de matériaux, il est possible de prévoir que les ressorts en spirale en bon état sont séparés et réutilisés pour la fabrication de nouveaux matelas, de nouveaux sommiers ou de tout autre produit adapté. Les ressorts inutilisables, et les autres pièces métalliques sont broyés dans les mêmes broyeurs que la quatrième famille de matériaux Ils sont ensuite envoyés en décharge ou vendus à des ferrailleurs.

A l'issu de l'étape de broyage 20, les matériaux broyés des différentes familles sont transférés dans des unités de stockage dédiées.

Il est à noter que l'étape de broyage provoque l'élimination partielle de certains composés chimiques, par exemple les COV. Ces composés sont par exemple libérés sous forme gazeuse.

A l'étape 22, un mélange est préparé à partir d'une ou plusieurs familles de matériaux broyés. Des quantités prédéterminées des différentes familles de matériaux broyés sont mélangées les unes aux autres, ces quantités étant choisies en fonction du produit final à obtenir.

Par ailleurs, un mélange de fibres bi-composantes est ajouté au mélange. Ce composant thermofusible est destiné, après chauffage, à consolider la nappe de matériaux, comme décrit plus loin.

En variante, d'autres matériaux peuvent être ajoutés au mélange. Par exemple, une quantité supplémentaire de fibre textile peut être ajoutée au mélange, en fonction du produit finit à produire. Il est possible d'ajouter au mélange des additifs choisis en fonction de la nature du produit fini. Par exemple, les additifs peuvent comporter un produit anti-acariens, un produit anti-feu...

Dans un premier exemple de réalisation, le produit fini est une nappe d'un matériau de type non tissé, d'épaisseur comprise entre 5 et 20mm. Le poids de cette nappe est typiquement compris entre 400 et 1200gr/m², de préférence entre 600 et 1000 gr/m², et vaut typiquement 800gr/m².

Pour produire une telle nappe, on choisit un mélange qui comprend, en poids :
- entre 40% et 80% de la première famille de matériaux, de préférence entre 50 et 70% de la première famille de matériaux, et par exemple 60% de la première famille de matériaux ;
- entre 15 et 45% de la troisième famille de matériaux, de préférence entre 25 et 35% de la troisième famille de matériaux, et typiquement 30% de la troisième famille de matériaux ;
- entre 5 et 20% du mélange de fibres bi-composantes, de préférence entre 5 et 15% du mélange de fibres bi-composantes, et typiquement 10% du mélange de fibres bi-composantes.

Dans un second exemple de réalisation, le produit fini est une nappe d'un matériau de type non tissé, d'épaisseur comprise entre 20 et 50mm. Le poids de la dite nappe est compris entre 1200 et 2200gr/m², de préférence entre 1400 et 2000gr/m², et vaut par exemple 1700gr/m².

Pour produire une telle nappe, on choisit un mélange qui comprend, en poids :
- entre 30% et 70% de la première famille de matériaux, de préférence entre 40 et 60% de la première famille de matériaux, et typiquement 50% de la première famille de matériaux ;
- entre 5% et 25% de la seconde famille de matériaux, de préférence entre 10 et 20% de la seconde famille de matériaux, et typiquement 15% de la seconde famille de matériaux ;
- entre 10% et 30% de la troisième famille de matériaux, de préférence entre 15% et 25% de la troisième famille de matériaux, et typiquement 20% de la troisième famille de matériaux ;
- entre 5% et 25% du mélange de fibres bi-composantes, de préférence 10 et 20% de mélange de fibres bi-composantes, et typiquement 15% du mélange de fibres bi-composantes.

Dans un troisième exemple de réalisation, le produit fini est une nappe d'un matériau de type non tissé, d'épaisseur supérieure à 50mm. La nappe présente par exemple une densité comprise entre 2000 et 4000gr/m², de préférence comprise entre 2500 et 3500 gr/m², et valant typiquement 3000 gr/m².

Pour produire cette nappe, on choisit un mélange qui contient, en poids :
- entre 20% et 60% de la première famille de matériaux, de préférence entre 30% et 50%, par exemple 40% de la première famille de matériaux ;
- entre 15% et 35% de la seconde famille de matériaux, de préférence entre 20% et 30%, par exemple de 25% de la seconde famille de matériaux ;
- entre 5% et 25% de la troisième famille de matériaux, de préférence entre 10% et 20%, par exemple 15% de la troisième famille de matériaux ;
- entre 10% et 30% du mélange de fibres bi-composantes, de préférence entre 15% et 25%, par exemple 20% du mélange de fibres bi-composantes.

Les fibres bi-composantes sont constituées de deux composants répartis sur toute la longueur de la fibre. Chaque composant peut présenter différentes propriétés physiques ou chimiques. Les composants peuvent être soit des variantes d'un même type de polymère, soit deux types de polymères totalement différents. Un exemple d'une telle fibre est commercialisé par la société MAX MODEL SA sous le nom « Polyester staple fibre, low melt 4/51mm 110°C flame retardant ref 4140 ». L'utilisation d'autres mélanges de fibres bi-composantes est envisageable.

A l'étape 24, une nappe de matériau non consolidée est formée à partir du mélange, typiquement selon le procédé connu sous le nom de «airlay ». Ce procédé consiste à former une nappe de matériau non tissé en dispersant le mélange dans un courant d'air de forte vélocité, et en déposant le mélange transporté par le courant d'air dans une chambre. Le courant d'air peut être créé par une surpression en amont de la chambre ou par une dépression en aval de la chambre.

Avant de passer à l'étape de formation de la nappe 24, le mélange peut passer dans une ou plusieurs ouvreuses, qui comportent chacune un ou plusieurs rouleaux rotatifs pourvus de picots. Ces rouleaux ont principalement pour fonction d'orienter les parties en textile de la première famille de matériaux, de manière à déconsolider les textiles et ouvrir les fibres. Les rouleaux permettent également de malaxer les différents matériaux du mélange, et d'homogénéiser ce mélange.

A la sortie de l'étape 24, les matériaux constituant la nappe ne sont pas encore liés entre eux et sont disposés en vrac sur un tapis.

A l'étape 26, la nappe de matériau non tissé est consolidée. Cette consolidation est effectuée par un traitement thermique. La nappe de matériaux non consolidée est chauffée dans un four, par exemple à une température de l'ordre de 180°C. Le traitement thermique provoque la fusion partielle du mélange de fibres bi-composantes, ce qui contribue à lier entre eux les différents composants du mélange (fibres textiles, latex, polyuréthane, copeaux de bois).

Ce traitement thermique provoque aussi l'élimination de certains composés chimiques, par exemple les COV et le formaldéhyde. Ces composés peuvent être décomposés thermiquement, ou être libérés sous forme gazeuse.

De manière concomitante à l'opération de traitement thermique, il est possible de laminer une couche de revêtement sur la nappe de matériaux. Il est possible de laminer toutes sortes de couches : des couches en tissus, des couches en cuir, des couches décoratives en matière plastique etc. Les deux faces de la nappe peuvent être ainsi revêtues. De préférence, l'une des faces est revêtue en amont de l'étape de traitement thermique, et l'autre immédiatement en aval de l'étape de traitement thermique.

Après l'étape de traitement thermique 26, la nappe passe à une étape de calandrage et à une étape de découpe, pour former des pièces de dimensions adaptées à leur utilisation finale. Alternativement, la nappe peut ne pas être découpée mais être enroulée et être stockée sous forme de rouleau (étape de conditionnement 28).

Enfin, la nappe est chargée et expédiée, soit sous forme de rouleau, soit sous forme de pièces déjà découpées (étape 30).

Le tunnel de traitement par micro-ondes est représenté sur la Figure 2. Il comprend :
- une enceinte 32, par exemple en forme de tunnel, pourvue d'une porte d'entrée 34 à une première extrémité, et d'une porte de sortie 36 à une seconde extrémité opposée à la première ;
- un dispositif générateur de micro-ondes 38, équipé d'une pluralité d'éléments générateurs de micro-ondes 40 placés dans le tunnel 32 ;
- un convoyeur principal 42, disposé à l'intérieur du tunnel 32 et prévu pour déplacer les éléments à traiter entre les deux extrémités du tunnel 32, un convoyeur 44 d'amenée des éléments à traiter, et un convoyeur 46 d'évacuation des éléments à traiter après passage dans le tunnel.

Les éléments générateurs de micro-ondes 40 sont répartis au-dessus et en - dessous du convoyeur 42. Ils sont répartis sur toute la longueur du tunnel 32, depuis la première extrémité jusqu'à la deuxième extrémité de ce tunnel. Chaque élément 40 présente une puissance unitaire comprise entre 2 et 3kW.

Le convoyeur principal 42 peut comporter une bande portant des reliefs en saillie 52 sur lesquels repose le matelas. Ainsi, le matelas ne repose pas directement sur la bande, et la plus grande partie de la grande face du matelas tournée vers la bande reste libre, c'est-à-dire sans contact avec un élément du convoyeur. Ceci améliore le traitement par micro-ondes.

Les portes 34 et 36 sont par exemple des portes de type guillotine.

Par ailleurs, le tunnel comporte une sonde 54 de mesure des températures de surface de l'élément à traiter. La sonde 54 fonctionne par pyrométrie infrarouge, et est adaptée pour mesurer les températures de surface pendant le traitement par micro-ondes. Le tunnel comporte encore un calculateur 56, prévu pour piloter le dispositif générateur de micro-ondes 38, les convoyeurs 42, 44 et 46, les portes 34 et 36, et la sonde de température 54.

Le fonctionnement du tunnel est le suivant.

Les éléments à traiter sont amenés les uns après les autres par le convoyeur d'amenée 44 jusqu'à la porte d'entrée 34. Ils sont traités un par un à l'intérieur du tunnel 32.

Le calculateur 56 commande alors l'ouverture de la porte d'entrée 34. Il commande ensuite la mise en marche des convoyeurs 42 et 44, de manière à faire pénétrer l'élément à traiter 57 à l'intérieur de l'enceinte 32. Le calculateur 56 commande ensuite la fermeture de la porte d'entrée 34, puis la mise en fonctionnement du dispositif générateur de micro-ondes 38. La puissance des micro-ondes émises par les émetteurs 40 et la durée d'exposition de l'élément 57 aux micro-ondes, sont commandées par le calculateur 56 en fonction des caractéristiques de l'élément à traiter. Pour les matelas, le calculateur prend en compte notamment : le matériau constituant l'âme du matelas (latex ou mousse de polyuréthane), l'épaisseur du matelas, la taille du matelas (longueur, largeur) et la portance du matelas.

Pendant l'émission des micro-ondes, l'élément 57 est déplacé à l'intérieur du tunnel par le convoyeur principal 42 selon des mouvements de va-et-vient entre les deux extrémités du tunnel 32.

Une fois le traitement par micro-ondes terminé, le calculateur commande l'ouverture de la porte de sortie 36 puis la mise en marche des convoyeurs 42 et 46, de manière à transférer l'élément traité depuis le convoyeur 42 jusqu'au convoyeur 46.

Le tunnel micro-ondes peut en outre comporter un poste de mesure automatique des dimensions du matelas (longueur, largeur, épaisseurs), par exemple à l'aide de caméras couplées à une unité de traitement numérique des images. Les dimensions mesurées sont transmises au calculateur 56.

Le calculateur 56 choisit le programme de traitement de l'élément en fonction des dimensions mesurées et de la portance relevée.

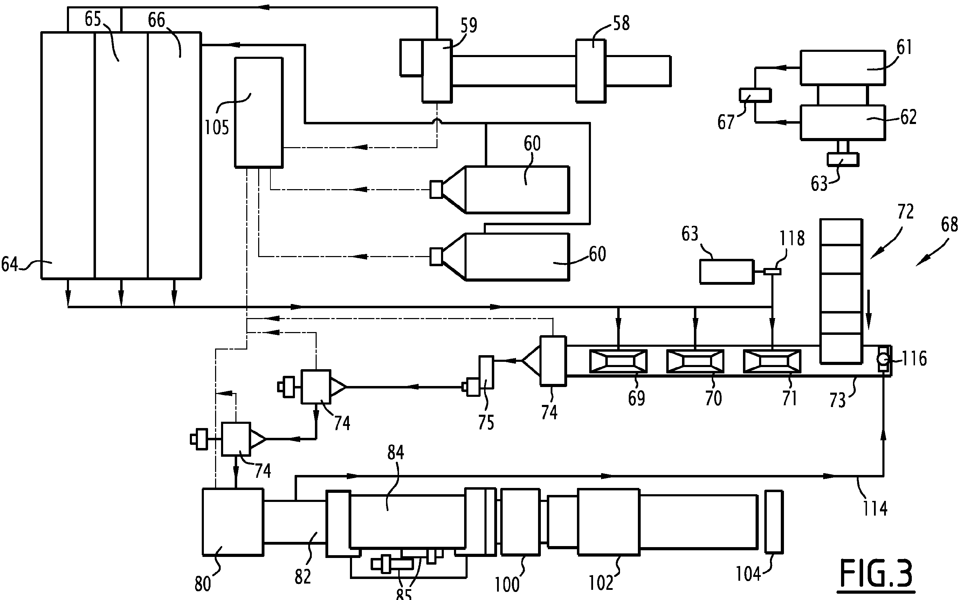

Les machines utilisées pour broyer les différentes familles de matériaux sont représentées sur la figure 3.

Concernant les première et seconde familles, les blocs sont d'abord coupés en tranches par des lames, par exemple dans une machine 58 de type guillotine. Dans un second temps, les tranches sont réduites en éléments de petite taille dans un granulateur 59 de type MG2000 MOLINARI. Le granulateur est du type à monorotor équipé de couteaux et d'une trémie de calibrage.

La troisième famille de matériaux est traitée par exemple dans un broyeur 60 à rouleaux équipés de couteaux, du type SM500 McAfee Shredder. Comme visible sur la figure 3, l'installation peut comporter deux lignes parallèles dédiées à la troisième famille de matériaux, chacune avec un broyeur 60. Les matériaux sortent des broyeurs sous la forme de fibres en bourre.

Les séparateurs vibrants équipés de rouleaux magnétiques, placés immédiatement en aval de chaque broyeur, ne sont pas représentés.

Les matériaux des trois premières familles sont stockés dans des conteneurs de grands volumes 64, 65, 66. Les broyeurs 60 sont reliés aux conteneurs 64, 65, 66 par des conduits. Les matériaux sont transférés le long des conduits par air pulsé. Les conteneurs 64, 65, 66 peuvent être équipés chacun de moyens d'agitation, par exemple de buses de soufflage d'air déplaçables à l'intérieur du conteneur. Les copeaux de bois de la quatrième famille sont stockés dans des sacs 63 et les pièces métalliques de la cinquième famille dans des bacs ou des conteneurs déplaçables 67. Chaque famille de matériaux est ainsi stockée séparément des autres familles de matériaux.

Le dispositif de mélange 68 est représenté schématiquement sur la figure 3. Le dispositif 68 comprend :
- trois dispositifs doseurs 69, 70, 71, dédiés respectivement aux première, seconde, et troisième familles de matériaux ;
- un dispositif 72 de dosage d'un mélange de fibres bi-composantes ;
- un convoyeur 73 alimenté par les dispositifs de dosage 69, 70, 71 et 72 ;
- au moins une ouvreuse 74, prévue pour malaxer les matériaux amenés par le convoyeur 73 ;
- un dispositif 75 d'ajout d'additifs ;

Les dispositifs de dosage 69, 70, 71 sont des silos, chacun ayant un volume interne prévu pour recevoir une quantité respectivement de la première famille, de la deuxième et de la troisième famille de matériaux. Chaque silo 69, 70, 71 est équipé de capteurs adaptés pour mesurer le poids de matériaux chargés à l'intérieur du volume interne. Les silos 69, 70, 71 sont raccordés par des conduits de transport aux stockages 64, 65, 66 dédiés respectivement aux première, seconde et troisième familles de matériaux. Le transfert est effectué par l'intermédiaire d'un dispositif à air pulsé.

Chaque silo 69, 70, 71 est équipé en partie inférieure d'une sortie située à l'aplomb du convoyeur 73. Chacun des silos est équipé d'une vanne pilotée, permettant de sélectivement ouvrir et fermer la sortie.

Le mélange de fibres bi-composantes se présente sous la forme d'un bloc de matériau fibreux. Le dispositif 72, dédié au dosage du mélange de fibres bi-composantes, comporte un outil prévu pour grignoter le bloc de mélange de fibres bi-composantes et produire des copeaux, une cellule de pesage des copeaux et un organe de transfert de la cellule de pesage vers le convoyeur 73.

L'outil de grignotage peut être de tout type adapté, et comporte par exemple une pluralité de pointes afin de détacher les fibres bi-composantes du bloc comprimé.

Les fibres détachées par l'outil de grignotage sont transférées à la cellule de pesage par exemple par une bande transporteuse. Elles sont transportées de la cellule de pesage au convoyeur 73 par une chute ou par une autre bande transporteuse.

Dans l'exemple de réalisation représenté sur la Figure 3, le dispositif 68 comporte trois ouvreuses 74 placées en série. Les matériaux déposés sur le convoyeur 73, à l'extrémité dudit convoyeur, sont déversés dans la première ouvreuse 74.

Les trois ouvreuses 74 sont du même type.

Le dispositif 75 est par exemple intercalé entre la première et la seconde ouvreuse 74. Il est prévu pour ajouter au mélange des additifs choisis en fonction de la nature du produit fini. Par exemple, les additifs peuvent comporter un produit anti-acariens, un produit anti-feu...

Les ouvreuses 74 et le dispositif 75 sont raccordés entre eux par des conduits de liaison. Le mélange est transféré le long des conduits par air pulsé.

Le dispositif de formation de la nappe de matériaux non consolidée, et le dispositif de traitement thermique sont représentés schématiquement sur la Figure 3. Le dispositif 80 de formation de la nappe est du type décrit dans la demande de brevet Italien n° ITPO2007002.

Ce dispositif comporte deux chambres à dépression, et est particulièrement bien adapté au traitement d'un mélange contenant une forte proportion de polyuréthane et de latex.

La dernière ouvreuse 74 est raccordée au dispositif de formation de la nappe 80 par un conduit. Le mélange est transféré le long du conduit par exemple par air pulsé.

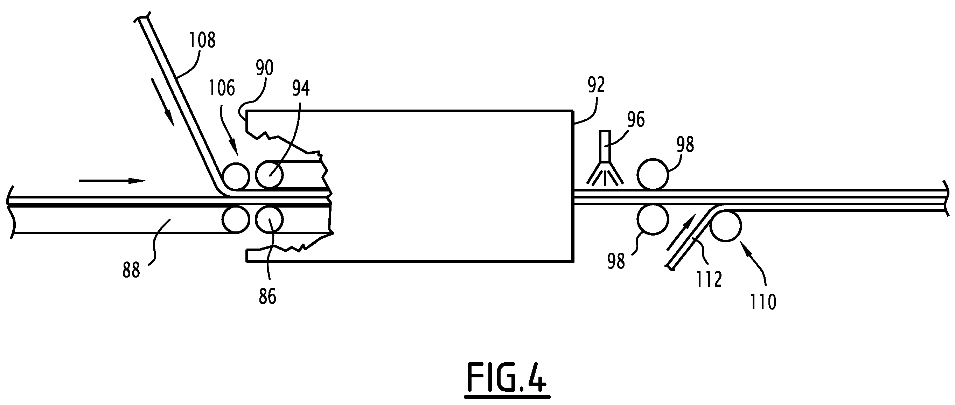

La nappe 82 sortant du dispositif 80 est transportée sur un convoyeur et pénètre dans un four 84 pour y subir le traitement thermique. Le four présente par exemple une longueur totale de 5m, et est divisé en deux chambres placées en série l'une avec l'autre. Il est chauffé par des brûleurs à gaz 85. Il est équipé de ventilateurs pour permettre la circulation de l'air chauffé par les brûleurs à l'intérieur des deux chambres. Le dispositif est équipé de deux convoyeurs placés à l'intérieur du four 84, comme visible sur la Figure 4. Le convoyeur inférieur 86 est placé dans le prolongement du convoyeur 88, qui assure le transport de la nappe depuis le dispositif de formation de la nappe 80 jusqu'au four 84. Le convoyeur 86 assure le transport de la nappe à travers le four 84 depuis l'entrée 90 jusqu'à la sortie 92. Le convoyeur supérieur 94 est placé au-dessus du convoyeur 86. L'écartement vertical du convoyeur 94 par rapport au convoyeur 86 est ajustable, de telle sorte que le convoyeur 94 calibre l'épaisseur de la nappe 82 à l'entrée du four. Le convoyeur 94 s'étend sensiblement sur toute la longueur du four, de l'entrée 90 à la sortie 92.

La nappe 82 subit un refroidissement en sortie du four 84, d'abord par projection d'air froid par l'intermédiaire de buses 96, puis par calandrage à l'aide de rouleaux refroidis 98. En aval des rouleaux de calandrage 98 peut être placé un dispositif 100 (Figure 3) apte à aiguiller la nappe 82 soit vers une unité de découpe 102 soit vers un rouleau de stockage 104.

Comme visible sur la Figure 4, le dispositif de traitement thermique peut en outre comporter un ensemble 106 permettant de laminer une couche de revêtement 108 sur l'une des faces de la nappe 82, ici la face supérieure. L'ensemble 106 est placé immédiatement en amont du four 84. Un dispositif similaire 110 est placé en aval des rouleaux de calandrage 98, de manière à laminer une autre couche de revêtement 112 sur la face opposée de la nappe 82, ici la face inférieure.

Le dispositif permet également le calandrage à froid de la nappe, opération mécanique destinée à stabiliser et fixer l'épaisseur souhaitée de nappe, que l'on obtient en fonction du degré de calandrage (pression et température de refroidissement) par lequel la nappe subit un choc thermique. Il peut servir de régulateur de débit et de dégazeur pour l'air et /ou les matières volatiles présents depuis l'amont du process.

Comme visible sur la Figure 3, les chutes de matière provenant du dispositif de formation de la nappe 80 sont collectées et renvoyées via la ligne 114 jusqu'au convoyeur 73. Après broyage dans un broyeur 116, ces matériaux sont recyclés sur ce convoyeur 73.

Le dispositif de mélange 63 comporte encore une unité d'aspiration 118, prévue pour aspirer des copeaux de bois et pour les transférer vers l'un des silos, 70 ou 71.

Les copeaux de bois en sortie des broyeurs 61 et 62 sont collectés dans des conteneurs, par exemple dans des sacs 63. Ces sacs 63 sont ensuite transportés à proximité du convoyeur 73, les copeaux de bois pouvant dès lors être aspirés par le dispositif 118.

L'installation de recyclage est encore équipée d'un dispositif de ventilation centralisée 105, pourvue d'extracteurs d'air adaptés pour aspirer l'air dans les principaux équipements de l'installation : les broyeurs pour la troisième famille de matériaux, le granulateur pour les première et seconde familles de matériaux, les silos, les ouvreuses, le dispositif 80 de formation de la nappe. Les poussières sont piégées sur un filtre, par exemple un filtre à manche. Elles peuvent être réutilisées par exemple dans des produits de revêtement de chaussée.

Les nappes obtenues par le procédé ci-dessus peuvent trouver de multiples applications. Les nappes contenant une forte proportion de polyuréthane peuvent être utilisées comme composants ou produits finis pour l'ameublement, notamment pour la protection des lattes de sommier, comme rehausseur de matelas, comme garnissage dans les plateaux des matelas. Ces nappes peuvent également être utilisées comme isolant thermique et phonique pour le secteur du bâtiment, ou comme matelassure pour l'automobile.

Dans le premier exemple de réalisation, le produit fini est une nappe d'un matériau de type non tissé, d'épaisseur comprise entre 5 et 20mm. La masse volumique est typique comprise entre 20 et 60 kg/m³, de préférence entre 30 et 50 kg/m³, et vaut par exemple 40 kg/m³.

Le mélange comprend dans ce cas, en poids :
- entre 60% et 90% de mousse de polyuréthane, de préférence entre 70% et 85% de mousse de polyuréthane, et typiquement entre 80% et 85% de mousse de polyuréthane
- entre 2% et 15% de fibres textiles, de préférence entre 3% et 10% de fibres textiles, et par exemple entre 4% et 8% de fibres textiles
- entre 5% et 20% du mélange de fibres bi-composantes, de préférence entre 5% et 15% du mélange de fibres bi-composantes, par exemple entre 8 et 12% du mélange de fibres bi-composantes.

Le produit fini, à savoir la nappe consolidée, sans les éventuels revêtements laminés, présente sensiblement la même composition massique.

Par exemple, la nappe consolidée comprend, en poids, 84% de mousse de polyuréthane, 6% de fibres textiles, et 10% de mélange de fibres bi-composantes.

Dans le second exemple de réalisation, le produit fini est une nappe d'un matériau de type non tissé, d'épaisseur comprise entre 20 et 50mm. La masse volumique de la nappe est comprise entre 25 et 65 kg/m³, de préférence entre 55 et 65 kg/m³, et vaut typiquement 46 kg/m³.

Des essais de fatigue statique ont été effectués pour cette nappe, selon la norme NFT56116. La perte de hauteur était d'environ 1.4mm. Par ailleurs, des essais de fatigue dynamique ont été effectués pour la dite nappe, selon la norme NF EN ISO3385. La perte de hauteur était d'environ 13.5mm, avec une perte de dureté de 14,6%.

Le mélange comprend pour cet exemple de réalisation, en poids :
- entre 45% et 75% de mousse de polyuréthane, de préférence entre 55% et 75% de mousse de polyuréthane, par exemple entre 65% et 70% de mousse de polyuréthane ;
- entre 5% et 25% de latex, de préférence entre 10% et 20% de latex, par exemple entre 13% et 17% de latex
- entre 1% et 10% de fibres textiles, de préférence entre 2% et 7% de fibres textiles, par exemple entre 3% et 5% de fibres textiles ;
- entre 5% et 25% du mélange de fibres bi-composantes, de préférence entre 10% et 20% du mélange de fibres bi-composantes, par exemple entre 13% et 17% du mélange de fibres bi-composantes.

Dans le troisième exemple de réalisation, le produit fini est une nappe d'un matériau de type non tissé, d'épaisseur supérieure à 50mm.

La masse volumique de la nappe est comprise entre 40 et 80kg/m³, de préférence entre 50 et 70kg/m³, et vaut typiquement 60 kg/m³.

Des essais de fatigue statistique ont été effectués sur cette nappe, selon la nappe NFT56116. La perte de hauteur était d'environ 0.5mm.

Des essais de fatigue dynamique ont également été effectués pour cette nappe, selon la norme NF EN ISO 3385. La perte de hauteur était de 8.8mm environ.

La perte de dureté est de l'ordre de 14.6%.

Le mélange comprend pour cet exemple de réalisation, en poids :
- entre 35% et 65% de mousse de polyuréthane, de préférence entre 45% et 60% de mousse de polyuréthane, par exemple entre 50% et 55% de mousse de polyuréthane ;
- entre 15% et 35% de latex, de préférence entre 20% et 30% de latex, par exemple entre 22% et 27% de latex ;
- entre 1% et 8% de fibres textiles, de préférence entre 2% et 6% de fibres textiles, par exemple entre 2% et 4% de fibres textiles ;
- entre 10% et 30% du mélange de fibres bi-composantes, de préférence entre 15% et 25% du mélange de fibres bi-composantes, par exemple entre 17% et 22% du mélange de fibres bi-composantes.

## Revendications

1. Procédé de recyclage de produits d'ameublement, notamment de matelas, de sommiers (46) et de sièges, le procédé comprenant les étapes suivantes :
- une étape de démembrement, dans laquelle des matériaux de base sont obtenus par démembrement du produit d'ameublement ;
- une étape (18) de tri, dans laquelle les matériaux de base sont séparés en plusieurs familles de matériaux, selon la nature des matériaux de base ;
- une étape (20) de broyage d'au moins une famille de matériaux ;
- une étape (22) de mélange, dans laquelle un mélange est préparé, le mélange comprenant une quantité prédéterminée d'au moins la famille de matériaux broyés,
**caractérisé en ce que** :
- l'étape (20) de broyage consiste à broyer séparément les différentes familles de matériaux ;
- l'étape (22) de mélange consiste à mélanger à la quantité prédéterminée d'au moins la famille de matériaux broyés une quantité prédéterminée de fibres bi-composantes et **en ce que** le procédé comprend en outre :
- une étape (24) de formation d'une nappe de matériau non tissé non consolidée à partir du mélange ;
- une étape (27) de consolidation de la nappe de matériau non tissé non consolidée ;
- une étape de calandrage de la nappe de matériau non tissé consolidée.

2. Procédé selon la revendication 1, **caractérisé en ce que** l'étape de calandrage est un calandrage à froid de la nappe de matériau non tissé consolidée.

3. Procédé selon la revendication 1 ou 2, **caractérisé en ce que**, à l'étape (18) de tri, les matériaux de base sont triés de manière à séparer au moins des première et troisième familles de matériaux, la première famille de matériaux rassemblant les matériaux de base qui à la fois ne contiennent pas de fibres textiles mais contiennent majoritairement du polyuréthane, et la troisième famille de matériaux rassemblant les matériaux de base contenant des fibres textiles.

4. Procédé selon l'une quelconque des revendications précédentes, **caractérisé en ce que**, à l'étape (18) de tri, les matériaux de base sont triés de manière à séparer au moins une seconde famille de matériaux, rassemblant les matériaux de bases contenant majoritairement du latex.

5. Procédé selon l'une quelconque des revendications précédentes, **caractérisé en ce qu'**il comprend une étape (14) de désinfection des éléments à traiter, avant l'étape (18) de démembrement.

6. Procédé selon la revendication 5, **caractérisé en ce que** la désinfection des éléments à traiter est effectuée par voie chimique par pulvérisation d'un produit désinfectant sur une surface externe des éléments de literie, ou par exposition des éléments à traiter à un rayonnement micro-ondes.

7. Procédé selon l'une quelconque des revendications précédentes, **caractérisé en ce que**, à l'étape (24) de formation de la nappe de matériau non tissé non consolidée, le mélange est entraîné et dispersé par un flux d'air et déposé dans une chambre, selon le procédé connu sous le nom d'air lay.

8. Procédé selon l'une quelconque des revendications précédentes, **caractérisé en ce que**, à l'étape (26) de consolidation, la nappe de matériau non tissé non consolidée est consolidée thermiquement.

9. Procédé selon la revendication 3, **caractérisé en ce que** le mélange comprend, en poids, entre 40% et 80% de la première famille de matériaux, entre 15% et 45% de la troisième famille de matériaux, et entre 5% et 20% d'un mélange de fibres bi-composantes.

10. Procédé selon les revendications 3 et 4, **caractérisé en ce que** le mélange comprend, en poids, entre 30% et 70% de la première famille de matériaux, entre 5% et 25% de la seconde famille de matériaux, entre 10% et 30% de la troisième famille de matériaux, et entre 5% et 25% d'un mélange de fibres bi-composantes.

11. Procédé selon les revendications 3 et 4, **caractérisé en ce que** le mélange comprend, en poids, entre 20% et 60% de la première famille de matériaux, entre 15% et 35% de la seconde famille de matériaux, entre 5% et 25% de la troisième famille de matériaux, et entre 10% et 30% d'un mélange de fibres bi-composantes.

12. Procédé selon l'une quelconque des revendications précédentes, **caractérisé en ce qu'**il comprend, avant l'étape de démembrement, une étape de détection dans l'élément à traiter d'une pluralité de composés chimiques prédéterminés.

13. Procédé selon la revendication 3, **caractérisé en ce que** le mélange comprend, en poids, entre 60% et 90% de mousse de polyuréthane, entre 2% et 15% de fibres textiles, et entre 5% et 20% du mélange de fibres bi-composantes.

14. Procédé selon les revendications 3 et 4, **caractérisé en ce que** le mélange comprend, en poids, entre 45% et 75% de mousse de polyuréthane, entre 5% et 25% de latex, entre 1% et 10% de fibres textiles, et entre 5% et 25% du mélange de fibres bi-composantes.

15. Procédé selon les revendications 3 et 4, **caractérisé en ce que** le mélange comprend, en poids, entre 35% et 65% de mousse de polyuréthane, entre 15% et 35% de latex, entre 1% et 8% de fibres textiles, et entre 10% et 30% du mélange de fibres bi-composantes.

16. Installation de recyclage d'éléments de literie, notamment de matelas, de sommiers et de sièges, l'installation comprenant :
- un dispositif de démembrement, dans lequel des matériaux de base sont obtenus par démembrement du produit d'ameublement ;
- un dispositif de tri, dans lequel les matériaux de base sont séparés en plusieurs familles de matériaux, selon la nature des matériaux de base ;
- un dispositif (58, 59, 60) de broyage d'au moins une famille de matériaux ;
- un dispositif de mélange (68), dans lequel un mélange est préparé, le mélange comprenant une quantité prédéterminée d'au moins la famille de matériaux broyés ;
**caractérisée en ce que** :
- le dispositif (58, 59, 60) de broyage permet de broyer séparément les différentes familles de matériaux ;
- le dispositif de mélange (68) convenant pour mélanger à la quantité prédéterminée d'au moins la famille de matériaux broyés une quantité prédéterminée de fibres bi-composantes et **en ce que** l'installation comprend en outre :
- un dispositif (80) de formation d'une nappe de matériau non tissé non consolidée à partir du mélange ;
- un dispositif (84) de consolidation de la nappe de matériau non tissé non consolidée
- un dispositif (98) de calandrage de la nappe de matériau non tissé consolidée.

17. Installation selon la revendication 16, **caractérisée en ce que** le dispositif (84) de consolidation est un four consolidant thermiquement la nappe de matériau non tissé non consolidée et le dispositif (98) permet le calandrage à froid de la nappe de matériau non tissé consolidée.

## Patentansprüche

1. Verfahren zur Wiederverwertung von Möbelstücken, insbesondere von Matratzen, Bettrahmen (46) und Sitzen, wobei das Verfahren die folgenden Schritte umfasst:
- einen Schritt des Zerteilens, in dem die Grundmaterialien durch das Zerlegen des Möbelstücks erzielt werden;
- einen Schritt (18) des Sortierens, in dem die Grundmaterialien gemäß der Beschaffenheit der Grundmaterialien in mehrere Materialfamilien getrennt werden;
- einen Schritt (20) des Zerkleinerns mindestens einer Materialfamilie;
- einen Schritt (22) des Mischens, in dem eine Mischung erstellt wird, wobei die Mischung eine vorbestimmte Menge mindestens der zerkleinerten Materialfamilie umfasst,
**dadurch gekennzeichnet, dass**
- der Schritt (20) des Zerkleinerns darin besteht, die verschiedenen Materialfamilien getrennt zu zerkleinern;
- der Schritt (22) des Mischens darin besteht, mit der vorbestimmten Menge mindestens der zerkleinerten Materialfamilie eine vorbestimmte Menge von Zweikomponentenfasern zu mischen, und dass das Verfahren ferner Folgendes umfasst:
- einen Schritt (24) des Bildens einer nicht verfestigten Vliesmateriallage aus der Mischung;
- einen Schritt (27) des Verfestigens der nicht verfestigten Vliesmateriallage;
- einen Schritt des Kalandrierens der verfestigten Vliesmateriallage.

2. Verfahren nach Anspruch 1, **dadurch gekennzeichnet, dass** der Schritt des Kalandrierens ein Kaltkalandrieren der verfestigten Vliesmateriallage ist.

3. Verfahren nach Anspruch 1 oder 2, **dadurch gekennzeichnet, dass** in dem Schritt (18) des Sortierens die Grundmaterialien sortiert werden, um mindestens erste und dritte Materialfamilien zu trennen, wobei die erste Materialfamilie die Grundmaterialien zusammenfasst, die sowohl keine Textilfasern enthalten als auch überwiegend Polyurethan enthalten, und die dritte Materialfamilie die Grundmaterialien zusammenfasst, die Textilfasern enthalten.

4. Verfahren nach einem der vorhergehenden Ansprüche, **dadurch gekennzeichnet, dass** in dem Schritt (18) des Sortierens die Grundmaterialien sortiert werden, um mindestens eine zweite Materialfamilie zu trennen, welche die Grundmaterialien zusammenfasst, die überwiegend Latex enthalten.

5. Verfahren nach einem der vorhergehenden Ansprüche, **dadurch gekennzeichnet, dass** es einen Schritt (14) des Desinfizierens der zu behandelnden Elemente vor dem Schritt (18) des Zerteilens umfasst.

6. Verfahren nach Anspruch 5, **dadurch gekennzeichnet, dass** das Desinfizieren der zu behandelnden Elemente chemisch durch Zerstäuben eines Desinfektionsmittels auf eine äußere Oberfläche des Bettzeugs oder durch Aussetzen der zu behandelnden Elemente an eine Mikrowellenstrahlung erfolgt.

7. Verfahren nach einem der vorhergehenden Ansprüche, **dadurch gekennzeichnet, dass** in dem Schritt (24) des Bildens der nicht verfestigten Vliesmateriallage die Mischung von einer Luftströmung mitgenommen und verteilt wird und gemäß dem Verfahren, das als "Airlay" bezeichnet wird, in einer Kammer abgelegt wird.

8. Verfahren nach einem der vorhergehenden Ansprüche, **dadurch gekennzeichnet, dass** in dem Schritt (26) des Verfestigens die nicht verfestigte Vliesmateriallage thermisch verfestigt wird.

9. Verfahren nach Anspruch 3, **dadurch gekennzeichnet, dass** die Mischung gewichtsmäßig zwischen 40 % und 80 % der ersten Materialfamilie, zwischen 15 % und 45 % der dritten Materialfamilie und zwischen 5 % und 20 % einer Mischung aus Zweikomponentenfasern umfasst.

10. Verfahren nach Anspruch 3 und 4, **dadurch gekennzeichnet, dass** die Mischung gewichtsmäßig zwischen 30 % und 70 % der ersten Materialfamilie, zwischen 5 % und 25 % der zweiten Materialfamilie, zwischen 10 % und 30 % der dritten Materialfamilie und zwischen 5 % und 25 % einer Mischung aus Zweikomponentenfasern umfasst.

11. Verfahren nach Anspruch 3 und 4, **dadurch gekennzeichnet, dass** die Mischung gewichtsmäßig zwischen 20 % und 60 % der ersten Materialfamilie, zwischen 15 % und 35 % der zweiten Materialfamilie, zwischen 5 % und 25 % der dritten Materialfamilie und zwischen 10 % und 30 % einer Mischung aus Zweikomponentenfasern umfasst.

12. Verfahren nach einem der vorhergehenden Ansprüche, **dadurch gekennzeichnet, dass** es vor dem Schritt des Zerteilens einen Schritt des Detektierens in dem zu behandelnden Element einer Vielzahl von vorbestimmten chemischen Verbindungen umfasst.

13. Verfahren nach Anspruch 3, **dadurch gekennzeichnet, dass** die Mischung gewichtsmäßig zwischen 60 % und 90 % Polyurethanschaum, zwischen 2 % und 15 % Textilfasern und zwischen 5 % und 20 % der Mischung aus Zweikomponentenfasern umfasst.

14. Verfahren nach Anspruch 3 und 4, **dadurch gekennzeichnet, dass** die Mischung gewichtsmäßig zwischen 45 % und 75 % Polyurethanschaum, zwischen 5 % und 25 % Latex, zwischen 1 % und 10 % Textilfasern und zwischen 5 % und 25 % der Mischung aus Zweikomponentenfasern umfasst.

15. Verfahren nach Anspruch 3 und 4, **dadurch gekennzeichnet, dass** die Mischung gewichtsmäßig zwischen 35 % und 65 % Polyurethanschaum, zwischen 15 % und 35 % Latex, zwischen 1 % und 8 % Textilfasern und zwischen 10 % und 30 % der Mischung aus Zweikomponentenfasern umfasst.

16. Anlage zur Wiederverwertung von Bettzeug, insbesondere von Matratzen, Bettrahmen und Sitzen, wobei die Anlage Folgendes umfasst:
- eine Vorrichtung zum Zerteilen, in der die Grundmaterialien durch Zerteilen des Möbelstücks erzielt werden;
- eine Vorrichtung zum Sortieren, in der die Grundmaterialien gemäß der Beschaffenheit der Grundmaterialien in mehrere Materialfamilien getrennt werden;
- eine Vorrichtung (58, 59, 60) zum Zerkleinern mindestens einer Materialfamilie;
- eine Vorrichtung zum Mischen (68), in der eine Mischung erstellt wird, wobei die Mischung eine vorbestimmte Menge mindestens der zerkleinerten Materialfamilie umfasst;
**dadurch gekennzeichnet, dass**:
- die Vorrichtung (58, 59, 60) zum Zerkleinern das getrennte Zerkleinern der verschiedenen Materialfamilien ermöglicht;
- die Vorrichtung (68) zum Mischen dazu dient, mit der vorbestimmten Menge mindestens der zerkleinerten Materialfamilie eine vorbestimmte Menge von Zweikomponentenfasern zu mischen, und dass die Anlage ferner Folgendes umfasst:
- eine Vorrichtung (80) zum Bilden einer nicht verfestigten Vliesmateriallage aus der Mischung;
- eine Vorrichtung (84) zum Verfestigen der nicht verfestigten Vliesmateriallage;
- eine Vorrichtung (98) zum Kalandrieren der verfestigten Vliesmateriallage.

17. Anlage nach Anspruch 16, **dadurch gekennzeichnet, dass** die Vorrichtung (84) zum Verfestigen ein Ofen ist, der die nicht verfestigte Vliesmateriallage thermisch verfestigt, und die Vorrichtung (98) das Kaltkalandrieren der verfestigten Vliesmateriallage ermöglicht.

## Claims

1. A method for recycling furniture, notably mattresses, bed bases (46) and seats, the method comprising the following steps:
- a dismembering step, wherein the base materials are obtained by dismemberment of the piece of furniture;
- a sorting step (18), wherein the base materials are separated into several families of materials, according to the nature of the base materials;
- a step (20) for milling at least one family of materials;
- a mixing step (22), wherein a mixture is prepared, the mixture comprising a predetermined amount of at least the family of milled materials;
**characterized in that**:
- the milling step (20) consists of separately milling the different families of materials;
- the mixing step (22) consists of mixing with the predetermined amount of at least the family of milled materials, a predetermined amount of two-component fibers and **in that** the method further comprises:
- a step (24) for forming a web of non-consolidated, non-woven material from the mixture;
- a step (27) for consolidating the web of non-consolidated, non-woven material;
- a step for calendering the consolidated web of non-woven material.

2. The method according to claim 1, **characterized in that** the calendering step is cold calendering of the consolidated web of non-woven material.

3. The method according to claim 1 or 2, **characterized in that**, in the sorting step (18), the base materials are sorted so as to separate at least the first and third families of materials, the first family of materials gathering the base materials which both do not contain textile fibers but contained in majority polyurethane, and the third family of materials gathering base materials containing textile fibers.

4. The method according to any of the preceding claims, **characterized in that**, in the sorting step (18), the base materials are sorted so as to separate at least one second family of materials, gathering base materials in majority containing latex.

5. The method according to any of the preceding claims, **characterized in that** it comprises a step (14) for disinfecting the elements to be treated, before the dismembering step (18).

6. The method according to claim 5, **characterized in that** the disinfection of the elements to be treated is carried out via a chemical route by spraying a disinfectant product on an external surface of bedding elements, or by exposing the errors to be treated to microwave radiation.

7. The method according to any of the preceding claims, **characterized in that**, in step (24) for forming the web of non-consolidated, non-woven material, the mixture is driven and dispersed by an airflow and deposited in a chamber, according to the method known under the name of air lay.

8. The method according to any of the preceding claims, **characterized in that**, in the consolidation step (26) the web of non-consolidated, non-woven material is thermally consolidated.

9. The method according to claim 3, **characterized in that** the mixture comprises, by weight, between 40 and 80% of the first family of materials, between 15% and 45% of the third family of materials, and between 5% and 20% of a mixture of two-component fibers.

10. The method according to claims 3 and 4, **characterized in that** the mixture comprises, by weight, between 30% and 70% of the first family of materials, between 5% and 25% of the second family of materials, between 10% and 30% of the third family of materials, and between 5% and 25% of a mixture of two-component fibers.

11. The method according to claims 3 and 4, **characterized in that** the mixture comprises, by weight, between 20% and 60% of the first family of materials, between 15% and 35% of the second family of materials, between 5% and 25% of the third family of materials, and between 10% and 30% of a mixture of two-component fibers.

12. The method according to any of the preceding claims, **characterized in that** it comprises, before the dismembering step, a step for detection in the element to be treated of a plurality of predetermined chemical compounds.

13. The method according to claim 3, **characterized in that** the mixture comprises, by weight, between 60% and 90% of polyurethane foam, between 2% and 15% of textile fibers, and between 5% and 20% of the mixture of two-component fibers.

14. The method according to claims 3 and 4, **characterized in that** the mixture comprises, by weight, between 45% and 75% of polyurethane foam, between 5% and 25% of latex, between 1% and 10% of textile fibers, and between 5% and 25% of the mixture of two-component fibers.

15. The method according to claims 3 and 4, **characterized in that** the mixture comprises, by weight, between 35% and 65% of polyurethane foam, between 15% and 35% of latex, between 1% and 8% of textile fibers, and between 10% and 30% of the mixture of two-component fibers.

16. Installation for recycling bedding elements, natively mattresses, bed bases and seats, the installation comprising:
- a dismembering device, wherein the base materials are obtained by dismemberment of the piece of furniture;
- a sorting device, wherein the base materials are separated into several families of materials, according to the nature of the base materials;
- a device (58, 59, 60) for milling at least one family of materials;
- a mixing device (68), where in a mixture is prepared, the mixture comprising a predetermined amount of at least the family of milled materials;
**characterized in that**:
- the milling device (58, 59, 60) gives the possibility of separately milling the different families of materials;
- the mixing device (68), suitable for mixing with the predetermined amount of at least the family of milled materials, a predetermined amount of two-component fibers and **in that** the installation further comprises:
- a device (80) for forming a non-consolidated web of non-woven material from the mixture;
- a device (84) for consolidating the non-consolidated web of non-woven material;
- a device (98) for calendering the consolidated web of non-woven material.

17. The installation according to claim 16, **characterized in that** the consolidation device (84) is an oven thermally consolidating the non-consolidated web of non-woven material and the device (98) allows cold calendering of the consolidated web of non-woven material.
